# EUROPÄISCHE PATENTANMELDUNG

(11) **EP 1 337 031 A2**
(43) Veröffentlichungstag der Anmeldung: **20.08.2003**
(21) Anmeldenummer: 03000288.5
(22) Anmeldetag: 09.01.2003
(51) Int. Cl.: H02M 3/158

(54) **Schaltungsanordnung zum Steuern induktiver Lasten**

(30) Priorität: 13.02.2002 DE 10205785
(71) Anmelder: Tyco Electronics AMP GmbH, 64625 Bensheim (DE)
(72) Erfinder: Bruck, Jürgen, 12524 Berlin (DE)
(74) Vertreter: Patentanwaltskanzlei WILHELM & BECK

(57) **Zusammenfassung**

Es wird eine Schaltungsanordnung für einen Spannungswandler mit einem induktiven Energiespeicher und einem Synchrongleichrichter beschrieben, bei der in Reihe mit dem Synchrongleichrichter eine zusätzliche Induktivität geschaltet ist. Durch die Anordnung dieser Induktivität wird eine Reduzierung der Schaltverluste bewirkt, wenn der Synchrongleichrichter verzögert sperrt.

## Beschreibung

Die Erfindung betrifft eine Schaltungsanordnung zur Steuerung einer induktiven Last gemäß dem Oberbegriff des Patentanspruchs 1.

Schaltungsanordnungen dieser Art werden beispielsweise auf dem Gebiet der pulsbreiten-modulierten Spannungswandlung mit einem induktiven Zwischenspeicher und einem Gleichrichter eingesetzt und sind unter anderem in Aufwärtswandlern enthalten.

Bekannte Schaltungsanordnungen weisen neben dem induktiven Energiespeicher vorteilhaft einen Synchrongleichrichter auf, über den eine erste Induktivität in einen ersten Kondensator abkommutieren kann. Ladeschalter und Synchrongleichrichter werden hierbei invers zueinander gesteuert. Die magnetisch geladene Induktivität kann sich bei gesperrtem Ladeschalter über den gesteuerten Synchrongleichrichter mit abnehmendem Strom in den ersten Kondensator entladen.

Wenn der Ladeschalter wieder leitend gesteuert wird, bevor der Strom in der Induktivität und im Synchrongleichrichter zu Null geworden ist, liegt eine sogenannte nicht-lückende Betriebsweise (continuous current mode) vor. Im Allgemeinen weist jedoch der Synchrongleichrichter eine Sperrverzögerung auf. Während der Verzögerungszeit sind sowohl der Ladeschalter als auch der Synchrongleichrichter leitend, und der Ladeschalter muss neben dem Strom durch die Induktivität zusätzlich einen inversen Strom durch den Synchrongleichrichter aufnehmen. Dabei tritt eine hohe Spannung und ein hoher Strom gleichzeitig auf, die den Ladeschalter und den Synchrongleichrichter stark belasten. Diese Belastung ist u.U. erheblich und führt bei höheren Schaltfrequenzen zu nicht mehr vertretbaren Verlustleistungen.

Die Aufgabe der Erfindung besteht darin, eine Schaltungsanordnung anzugeben, die eine verbesserte Funktionsweise aufweist.

Die Aufgabe der Erfindung wird durch die Schaltungsanordnung gemäß Patentanspruch 1 gelöst.

Weitere vorteilhafte Ausführungsformen der Erfindung sind in den abhängigen Ansprüchen angegeben.

Erfindungsgemäß wird zwischen den Ladeschalter (erster Schalter) und den Synchrongleichrichter (zweiter Schalter) eine zweite Induktivität geschaltet und dadurch eine Entkopplung zwischen dem ersten und dem zweiten Schalter bewirkt. Auf diese Weise wird erreicht, dass bei gleichzeitig leitenden Schaltern im nicht-lückenden Betrieb nur ein geringer, kontrollierter Strom vom Schaltungsausgang über den zweiten Schalter und die zweite Induktivität zurück zum ersten Schalter fließt, beide Schalter gegen zu große Ströme und der erste Schalter vor zusätzlicher Verlustleistung geschützt werden. Insgesamt ergibt sich besonders bei hohen Arbeitsfrequenzen ein besserer Wirkungsgrad.

In einer bevorzugten Ausführungsform sind der erste und der zweite Schalter als invers zueinander arbeitende Schalter ausgebildet und an eine gemeinsame Steuerleitung angeschlossen. Somit wird sichergestellt, dass immer nur ein Schalter leitend gesteuert ist. Vorteilhaft sind der erste und der zweite Schalter in Form von MOS-Transistoren mit zueinander komplementärem Leitungstyp ausgebildet.

Eine derart zwischengeschaltete zweite Induktivität erfordert einerseits die Anordnung einer ersten (Freilauf-)Diode, um die Spannung am zweiten Schalter zu begrenzen, und andererseits die Begrenzung der Spannung am ersten Schalter, da dieser im Moment des Sperrens nur mit magnetisch geladenen Induktivitäten umgeben ist.

In einer vorteilhaften Ausführungsform wird daher eine zweite Diode vorgeschlagen, die den Strom der ersten Induktivität nach Überschreiten einer Grenzspannung am ersten Schalter in einen zweiten, am Bezugspotential liegenden Kondensator umleitet. In dem Maße, wie die Spannung an dem zweiten Kondensator in Folge ansteigt, steigt auch die Spannung an der zweiten Induktivität und bewirkt einen Stromanstieg in dieser, so dass ein gleitender Stromübergang von der zweiten Diode in die zweite Induktivität erfolgt. Wenn der Strom der ersten Induktivität vollständig von der zweiten Induktivität und dem zweiten Schalter in den als Ausgangsspeicher wirkenden ersten Kondensator übernommen worden ist, bricht die Spannung am ersten Schalter wieder auf einen Wert nahe der Ausgangsspannung zusammen, und die zweite Diode entkoppelt den zweiten Kondensator vom ersten Schalter und von den Induktivitäten.

In einer weiteren vorteilhaften Ausführungsform ist der zweite Kondensator über eine dritte Induktivität mit dem ersten Kondensator und dem Ausgang der Schaltungsanordnung verbunden. Durch Kommutierung wird die Energie, die über die zweite Diode in den zweiten Kondensator zwischengespeichert worden ist, an den ersten Kondensator übertragen und somit eine verlustarme Rückgewinnung erreicht.

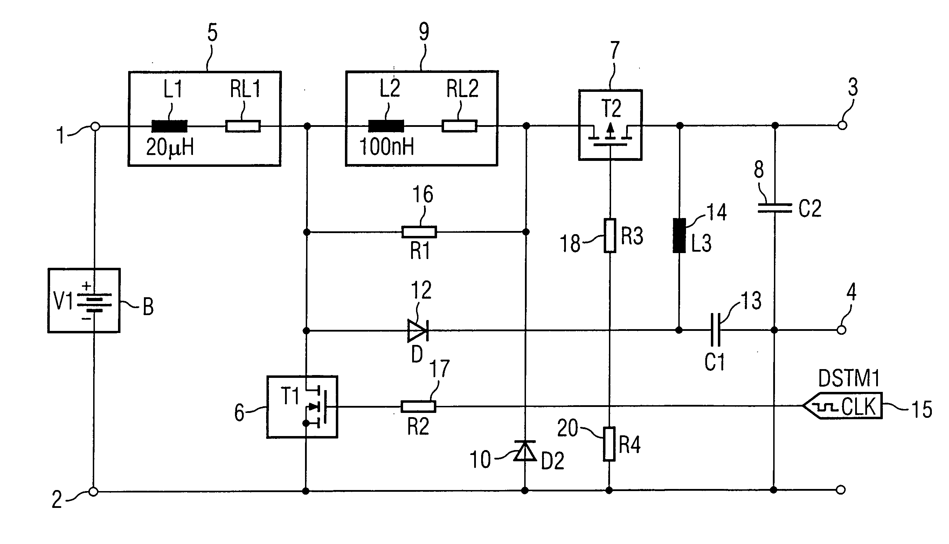

Die Erfindung wird im Folgenden anhand der Figur näher erläutert.

Die Figur zeigt an einen Gleichspannungswandler in Form eines Aufwärtswandlers eine mögliche Ausführungsform der Erfindung. Die technische Lehre der Erfindung ist jedoch auf jede Art von Schaltungsanordnung zum Steuern induktiver Lasten mit Gleichrichtern, insbesondere Synchrongleichrichtern, anwendbar und nicht auf das beschriebene Ausführungsbeispiel beschränkt.

Die Schaltungsanordnung weist neben zwei Eingangsanschlüssen 1 und 2 zwei Ausgangsanschlüsse 3 und 4 auf. Der zweite Eingangsanschluss 2 und der zweite Ausgangsanschluss 4 sind als Bezugspotential vorzugsweise miteinander verbunden. Der erste Eingangsanschluss 1 ist über eine Reihenschaltung aus einer ersten Induktivität 5 und einem ersten Schalter 6 mit dem Bezugspotential 2, 4 verbunden. Die erste Induktivität 5 weist einen Wert L1 auf und ist vorzugsweise in Form einer Spule ausgebildet.

Eine zweite Induktivität 9 ist einerseits mit der ersten Induktivität 5 und dem ersten Schalter 6, andererseits über einen zweiten Schalter 7 mit dem ersten Anschluss eines Kondensators 8 und dem ersten Ausgangsanschluss 3 verbunden. Der zweite Anschluss des Kondensators 8 ist mit dem Bezugspotential 2, 4 verbunden.

Eine erste Diode 10 verbindet den Verbindungspunkt von zweiter Induktivität 9 und zweitem Schalter 7 mit dem Bezugspotential 2, 4. Die zweite Induktivität 9 weist einen Wert L2 auf und ist vorzugsweise in Form einer Spule ausgebildet.

Weiter ist die erste Induktivität 5 und der ersten Schalter 6 über eine Reihenschaltung aus einer zweiten Diode 12 und einem zweiten Kondensator 13 mit dem Bezugspotential 2, 4, und der Verbindungspunkt von Diode 12 und Kondensator 13 ist über eine dritte Induktivität 14 mit dem Ausgangsanschluss 3 verbunden.

Die beiden Schalter 6, 7 werden über einen gemeinsamen Steuereingang 15 gesteuert. Parallel zur zweiten Induktivität 9 ist ein Widerstand 16 geschaltet, um Partialschwingungen zu dämpfen. In dem dargestellten Ausführungsbeispiel sind der erste und der zweite Schalter 6, 7 in Form von zwei MOS-Transistoren ausgebildet. Die zwei MOS-Transistoren weisen einen komplementären Leitungstyp zueinander auf, so dass bei einem geeigneten Steuersignal, das über den Steueranschluss 15 zugeführt wird, jeweils nur ein Schalter leitet und der andere Schalter sperrt. Je nach Ausführungsform können jedoch der erste und der zweite Schalter auch über getrennte Steueranschlüsse steuerbar ausgebildet sein.

Die Schaltungsanordnung der Figur funktioniert wie folgt. In einer Ausgangsposition ist der erste Schalter 6 als gesperrt und der zweite Schalter 7 als leitend angenommen. Die magnetisch geladene Induktivität 5 kommutiert über die zweite Induktivität 9 und den Schalter 7 in den Kondensator 8 ab. Wird nun zu einem Zeitpunkt, in dem der Strom in der ersten Induktivität 5 noch nicht zu Null abgenommen hat, über den Steueranschluss 15 ein Steuersignal angelegt, das den ersten Schalter 6 leitend steuert und den zweiten Schalter 7 sperrt, ist eine nicht-lückende Betriebsweise gegeben. Aufgrund einer möglichen Sperrverzögerung des zweiten Schalters 7 ist dieser noch kurzzeitig leitend.

Die zweite Induktivität 9 entkoppelt die Schalter 6, 7 derart voneinander, dass zwar Spannungssprünge an den Schaltern 6, 7 auftreten können, sich aber keine Stromsprünge in den Schaltern 6, 7 einstellen können. Auf diese Weise wird verhindert, dass bei der nicht-lückenden Betriebsweise ein hoher Strom vom Kondensator 8 als Ausgang der Schaltung rückwärts durch den noch leitenden zweiten Schalter 7 und den schon leitenden ersten Schalter 6 zum Bezugspotential verursacht wird.

Infolge der Spannungsumkehr an der zweiten Induktivität 9 wird der Strom in der zweiten Induktivität 9 von seinem momentanen Wert auf Null kommutiert, speist aber dabei immer noch den Ausgang der Schaltungsanordnung. Der Strom im ersten Schalter 6 steigt dabei linear von Null auf den Wert des Stromes in der ersten Induktivität 5 an. In diesem Moment sollte die Sperrverzögerung des zweiten Schalters 7 beendet sein. Infolge Toleranzen der Sperrverzögerung und der parasitären Kapazitäten des zweiten Schalters 9 kann aber auch ein verhältnismäßig kleiner inverser Strom die Induktivität 9 erneut geringfügig magnetisch aufladen. Diese Energie wird durch die erste ( Freilauf-)Diode 10 und den nun leitenden ersten Schalter 6 abgebaut.

Vorzugsweise ist der Wert der zweiten Induktivität 9 vergleichsweise sehr klein gegenüber dem der ersten Induktivität 5. Beispielsweise beträgt der Wert der zweiten Induktivität L2 nur ein Hundertstel des Wertes der ersten Induktivität von L1, sollte aber in jedem Falle der Sperrverzögerung des zweiten Schalters 7, dem Ausgangsstrom des Wandlers und den zulässigen Querströmen angepasst sein.

Wird nun über das Steuersignal 15 der erste Schalter 6 wieder gesperrt und der zweite Schalter 7 leitend gesteuert, dann wird der folgende, durch die erste Induktivität 5 erzwungene Spannungsanstieg am ersten Schalter 6 auf einen Maximalwert begrenzt, der durch die Durchlassspannung der zweiten Diode 12 und die Momentanspannung am Kondensators 13 festgelegt ist. In Folge leitet die zweite Diode 12 den Strom der ersten Induktivität 5 in den zweiten Kondensator 13 und lässt hierdurch die Spannung am ersten Schalter 6 nur verhältnismäßig langsam ansteigen.

Übersteigt die Spannung am zweiten Kondensator 13 während dieser Phase die Spannung am ersten Kondensator 8, dann wird bei nun leitend gesteuertem zweiten Schalter 7 eine Spannung über der zweiten Induktivität 9 erzeugt, die zu einem schnellen Stromanstieg in der zweiten Induktivität 9 führt. Während dieser Phase erfolgt ein gleitender Übergang des Stromes der ersten Induktivität 5 vom zweiten Kondensator 13 in die zweite Induktivität 9. Ist der Strom in der zweiten Induktivität 9 auf den Wert des Stromes in der ersten Induktivität 5 angestiegen, bricht die Spannung am ersten Schalter 6 auf den Wert der Ausgangsspannung zusammen. Die zweite Diode 12 entkoppelt daraufhin den zweiten Kondensator 13 von den Induktivitäten 5 und 9. Der zweite Kondensator 13 und die dritte Induktivität 14 bilden einen Schwingkreis, der einen Teil der Energie des zweiten Kondensators 13 in den ersten Kondensator 8 kommutiert.

Die Resonanzfrequenz des Schwingkreises, der aus dem zweiten Kondensator 13 und der dritten Induktivität 14 gebildet wird, liegt vorteilhaft bei der Hälfte der Steuerfrequenz des Wandlers. Wird beispielsweise der Wandler mit einer Frequenz von 100 kHz betrieben, so liegt die Resonanzfrequenz des Schwingkreises vorzugsweise im Bereich von 50 kHz. Durch die periodisch erzwungene Halbschwingung dieses Schwingkreises wird der zweite Kondensator 13 zu Beginn der nächsten Sperrphase des ersten Schalters 6 unter die Spannung des ersten Kondensators 8 umgeladen und so der Sperrvorgang des ersten Schalters 6 entlastet, da ein Stromübergang vom ersten Schalter 6 auf den zweiten Kondensator 13 früher erfolgt.

Ein kleinerer Wert der Kapazität des zweiten Kondensators 13 führt dabei zu einer zeitweisen höheren Spannungsbelastung des sperrenden ersten Schalters 6, aber auch zu einem schnelleren Stromanstieg in der zweiten Induktivität 9 und zu einer kleineren Übernahmespannung am Beginn der folgenden Sperrphase des ersten Schalters 6.

### Bezugszeichenliste

- 1: erster Eingangsanschluss
- 2: zweiter Eingangsanschluss, Bezugspotential
- 3: erster Ausgangsanschluss
- 4: zweiter Ausgangsanschluss, Bezugspotential
- 5: erste Induktivität
- 6: erster Schalter
- 7: zweiter Schalter
- 8: erster Kondensator
- 9: zweite Induktivität
- 10: erste Diode
- 12: zweite Diode
- 13: zweiter Kondensator
- 14: dritte Induktivität
- 15: gemeinsamer Steuerungsanschluss
- 16: Dämpfungswiderstand

## Patentansprüche

1. Schaltungsanordnung zum Steuern induktiver Lasten mit einem ersten und einem zweiten Eingangsanschluss (1, 2), mit einem ersten und einem zweiten Ausgangsanschluss (3, 4), mit einer ersten Induktivität (5), die einerseits mit dem ersten Eingangsanschluss (1) und andererseits über einen ersten steuerbaren Schalter (6) mit dem zweiten Eingangsanschluss (2) und dem zweiten Ausgangsanschluss (4) verbunden ist, mit einem zweiten steuerbaren Schalter (7), der einerseits mit der ersten Induktivität (5) und andererseits mit dem ersten Ausgangsanschluss (3) verbunden ist, mit einem ersten Kondensator (8), der einerseits mit dem ersten Ausgangsanschluss (3) und andererseits mit dem zweiten Ausgangsanschluss (4) verbunden ist,
**dadurch gekennzeichnet,**
**dass** zwischen den Verbindungspunkt der ersten Induktivität (5) mit dem ersten Schalter (6)
und den zweiten Schalter (7) eine zweite Induktivität (9) geschaltet ist,
**dass** eine erste Diode (10) den Verbindungspunkt der zweiten Induktivität (9) mit dem zweiten Schalter (7) mit dem Eingangsanschluss (2) und dem Ausgangsanschluss (4) verbindet.

2. Schaltungsanordnung nach Anspruch 1, **dadurch gekennzeichnet,**
**dass** eine Einrichtung vorgesehen ist, die die Spannung über dem ersten Schalter (6) in der Höhe begrenzt, und
**dass** die Einrichtung eine zweite Diode (12), einen zweiten Kondensator (13) und eine dritte Induktivität (14) enthält, dass die Diode (12) den Verbindungspunkt der ersten Induktivität (5) mit dem ersten Schalter (6) und den ersten Anschluss des zweiten Kondensators (13) verbindet, dessen zweiter Anschluss mit dem zweiten Eingangsanschluss (2) und dem zweiten Ausgangsanschluss (4) verbunden ist, und dass der Verbindungspunkt der zweiten Diode (12) mit dem zweiten Kondensator (13) über die dritte Induktivität (14) mit dem ersten Ausgangsanschluss (3) verbunden ist.

3. Schaltungsanordnung nach Anspruch 2, **dadurch gekennzeichnet, dass** die Resonanzfrequenz eines Schwingkreises, den der Kondensator (13) und die Induktivität (14) bilden, bei der halben Frequenz der Ansteuerung der steuerbaren Schalter (6, 7) liegt.

4. Schaltungsanordnung nach einem der Ansprüche 1 bis 3, **dadurch gekennzeichnet, dass** der erste und der zweite Schalter (6, 7) an eine gemeinsame Steuerleitung (15) angeschlossen sind, dass der erste und der zweite Schalter (6, 7) als zueinander inverse Schalter ausgebildet sind, so dass bei Anliegen eines gemeinsamen Steuersignals einer der zwei Schalter (6, 7) leitet und der andere Schalter (7, 6) sperrt.

5. Schaltungsanordnung nach einem der Ansprüche 1 bis 4, **dadurch gekennzeichnet, dass** der erste und der zweite Schalter (6, 7) als zueinander komplementäre MOS-Transistoren ausgebildet sind.

6. Schaltungsanordnung nach Anspruch 1, **dadurch gekennzeichnet, dass** parallel zu der zweiten Induktivität (9) ein Widerstand (16) geschaltet ist.
